(19) **Europäisches Patentamt**
**European Patent Office**
**Office européen des brevets**

(11) **EP 2 860 869 B1**

(12) **FASCICULE DE BREVET EUROPEEN**

(45) Date de publication et mention
de la délivrance du brevet:
**09.11.2016 Bulletin 2016/45**

(21) Numéro de dépôt: **14187369.5**

(22) Date de dépôt: **01.10.2014**

(51) Int Cl.:
*H02P 6/08* *(2006.01)*    *H02P 7/00* *(2016.01)*
*F16D 28/00* *(2006.01)*   *B60L 1/00* *(2006.01)*
*B60L 3/00* *(2006.01)*    *B60L 15/02* *(2006.01)*
*B60L 15/20* *(2006.01)*   *H02P 7/03* *(2016.01)*
*B60L 11/14* *(2006.01)*

(54) **Actionneur électrique pour système de transmission de véhicule**

Elektrisches Stellglied für Übertragungssystem eines Fahrzeugs

Electric actuator for vehicle transmission system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2013 FR 1359775**

(43) Date de publication de la demande:
**15.04.2015 Bulletin 2015/16**

(73) Titulaire: **Valeo Embrayages**
**80009 Amiens Cedex 2 (FR)**

(72) Inventeurs:
• **Maurel, Hervé**
**80000 Amiens (FR)**
• **Maurel, Pascal**
**75009 Paris (FR)**

(56) Documents cités:
**FR-A1- 2 896 354     FR-A1- 2 911 698**
**JP-A- S5 615 155     JP-A- 2008 067 582**
**US-A- 3 469 166**

EP 2 860 869 B1

## Description

La présente invention concerne un actionneur électrique pour système de transmission de véhicule.

L'invention s'applique notamment, mais non exclusivement, à l'actionnement d'un embrayage simple ou double dont l'état au repos peut être normalement embrayé ou normalement débrayé, à l'actionnement d'un synchroniseur de boîte de vitesses pour transmission manuelle, à l'actionnement d'une boîte de vitesses robotisée, à l'actionnement d'une boîte de vitesses manuelle à double embrayage, ou encore à l'actionnement d'un embrayage de couplage d'un moteur thermique avec une machine électrique lorsque ces deux derniers font partie d'une chaîne de propulsion d'un véhicule hybride.

Un tel système de transmission est supposé avoir plusieurs configurations : une configuration dans laquelle il permet la transmission d'un mouvement, c'est-à-dire qu'il est dans l'état embrayé, et une configuration dans laquelle cette transmission ne s'effectue pas, c'est-à-dire qu'il est dans l'état débrayé. L'actionneur électrique permet alors, via un moteur électrique, le maintien du système de transmission dans l'une au moins de ces configurations et le passage de l'une à l'autre de ces configurations.

Le maintien par l'actionneur du système de transmission dans une configuration nécessite l'exercice par ce dernier d'un couple de maintien sur le système de transmission, et l'exercice de ce couple est lié à l'alimentation électrique du moteur de l'actionneur par un courant de maintien. Pour réduire la taille de la source d'énergie électrique dédiée à l'alimentation électrique du moteur, il importe que ce courant de maintien soit peu élevé. En outre, ce courant de maintien étant susceptible de générer par effet Joule un échauffement dans le moteur, la réduction de ce courant permet de réduire les risques d'usure prématurée de l'actionneur, voire de destruction par incendie de ce dernier. Ce courant de maintien I pouvant être lié par une constante K au couple électromagnétique T exercé sur le moteur électrique selon la relation T=K*I, cela impose de dimensionner le moteur de sorte que la constante K ait une valeur élevée.

Le passage du système de transmission de l'une à l'autre des configurations ci-dessus doit être effectué rapidement afin de répondre de façon satisfaisante à une consigne. Pour obtenir une telle rapidité, le moteur doit permettre d'obtenir des vitesses élevées, ce qui nécessite une constante K de valeur peu élevée.

L'obtention d'un actionneur électrique permettant de réduire le courant de maintien tout en répondant de façon satisfaisante aux consignes dynamiques suppose ainsi le respect d'exigences contradictoires.

Dans ce but, il est connu d'associer un moteur électrique de petite taille avec un réducteur de rapport variable mécaniquement pour adapter la vitesse et le courant du moteur électrique en fonction des consignes, et avec un système de rattrapage d'usure du système de transmission. Il est par ailleurs connu d'associer un moteur électrique de petite taille avec un réducteur de rapport fixe, avec un système élastique fournissant ponctuellement au moteur l'effort nécessaire, et avec un système de rattrapage d'usure du système de transmission.

De telles solutions sont complexes à réaliser et nécessitent l'ajout de pièces spécifiques dont un système de rattrapage d'usure du système de transmission, étant en conséquence coûteuses et encombrantes.

FR 2 896 354 divulgue actionneur pour système de transmission de véhicule, comprenant :

- une machine électrique comprenant un induit et un inducteur,
- un convertisseur statique comprenant une pluralité de cellules de commutation, le convertisseur statique étant disposé de manière à relier électriquement le circuit électrique de l'induit à une source d'énergie électrique, et
- un système de commande des cellules de commutation du convertisseur statique.

US 3 469 166 divulgue un actionneur pour dispositif d'essuyage de pare-brises.

L'invention vise à permettre de bénéficier d'un actionneur électrique pour système de transmission qui permette de concilier les exigences mentionnées précédemment tout en remédiant aux inconvénients des solutions connues.

L'invention y parvient, selon l'un de ses aspects, à l'aide d'un actionneur pour système de transmission de véhicule, comprenant :

- une machine électrique comprenant un induit et un inducteur, la machine étant telle que la relation entre une grandeur représentative du couple électromagnétique T exercé sur la machine et une grandeur représentative du courant I circulant dans le circuit électrique de l'induit fasse intervenir une constante K, K étant la constante de couple de la machine électrique,
- un convertisseur statique comprenant une pluralité de cellules de commutation, le convertisseur statique étant disposé de manière à relier électriquement le circuit électrique de l'induit à une source d'énergie électrique, et
- un système de commande des cellules de commutation du convertisseur statique, ledit système étant configuré de manière que la constante de couple K de la machine électrique puisse prendre au moins deux valeurs distinctes selon la commande appliquée auxdites cellules.

Dans le cas d'une machine synchro réluctante le couple électromagnétique est alors proportionnel au courant élevé au carré, l'invention reste valide et applicable même dans ce cas là.

La relation ci-dessus peut être une relation linéaire ou affine entre le couple électromagnétique T exercé sur la machine et le courant I circulant dans le circuit électrique de l'induit, par exemple dans le cas où la machine électrique est une machine à courant continu comme on le verra par la suite. La relation s'exprime alors $T = K \times I + T_0$ où $T_0$ est nul, le cas échéant.

En variante, la relation ci-dessus peut être une relation linéaire ou affine entre le couple électromagnétique T exercé sur la machine et un courant I', image par une ou plusieurs transformées mathématiques, par exemple de Clarke et de Park, du courant I circulant dans le circuit électrique de l'induit, par exemple dans le cas où la machine électrique est une machine synchrone, comme on le verra par la suite.

La relation s'exprime alors $T = K \times I' + T_0'$ où $T_0'$ est nul, le cas échéant.

En variante encore, la relation ci-dessus peut être une relation carrée entre le couple électromagnétique T exercé sur la machine et le courant I circulant dans le circuit électrique de l'induit, par exemple dans le cas où la machine électrique est une machine synchro-reluctante, comme on le verra par la suite.

La relation s'exprime alors

$$T = K \times I^2 + T_0'' \text{ où } T_0'' \text{ est nul, le cas échéant.}$$

Chaque valeur de la constante de couple peut correspondre à un mode de fonctionnement différent de l'actionneur. Le passage de l'un à l'autre de ces modes de fonctionnement s'obtient alors en modifiant la commande des cellules de commutation. Autrement dit, contrairement aux solutions selon l'art antérieur, la possibilité pour l'actionneur d'avoir au moins deux modes de fonctionnement différents ne nécessite pas le recours à une architecture matérielle complexe et l'utilisation sélective de certains des éléments de cette architecture selon le mode de fonctionnement souhaité pour l'actionneur. Une seule et même architecture matérielle dont on modifie lorsque nécessaire la commande permet selon l'invention de bénéficier d'un actionneur à au moins deux modes de fonctionnement distincts.

Le système de commande peut être configuré de manière à ce que la constante de couple K de la machine électrique ait une valeur élevée, de manière à permettre de réduire la valeur du courant alimentant la machine électrique, sans pour autant affecter la valeur du couple exercé par l'actionneur sur le système de transmission. Cette valeur élevée convient par exemple pour maintenir en état le système de transmission ou pour déplacer lentement l'actionneur.

L'actionneur peut comprendre un réducteur et ce dernier peut présenter un rapport de réduction fixe, choisi en fonction de l'effort maximal imposé par le système de transmission sur l'actionneur, de manière à réduire le couple électromagnétique devant être appliqué au rotor de la machine électrique lorsqu'elle maintient le système de transmission dans un état donné.

Ce rapport fixe de réduction permet avantageusement de réaliser le compromis entre :

- la réduction la plus important possible de la valeur du couple électromagnétique correspondant à l'effort maximal imposé par le système de transmission et mentionné ci-dessus, et
- une course ou un nombre de révolutions minimal permettant de parcourir la course d'actionnement de l'actionneur de sa position de repos vers une position où il maintient le système de transmission dans l'état donné en un temps qui soit le plus faible possible.

Cette valeur fixe pour le rapport de réduction permet par exemple de réduire de 25 % à 50% la valeur du couple électromagnétique permettant ledit maintien par rapport à la valeur de couple électromagnétique à fournir par l'actionneur avec un réducteur permettant de réaliser le déplacement de l'actionneur de sa position de repos jusqu'à la position de maintien dans un temps imparti situé par exemple entre 80 et 150ms pour un embrayage entre 30 et 60ms pour un actionneur pour synchroniseur. Avec un tel réducteur, on peut encore diminuer la valeur du courant nécessaire lorsque l'actionneur est dans ce mode de fonctionnement. En effet, la valeur de couple que doit exercer l'actionneur étant réduite, pour une même valeur élevée de la constante de couple K, la valeur du courant alimentant la machine électrique est encore réduite. Ainsi, la valeur du courant prélevé sur une source d'énergie électrique est abaissée de manière significative. La valeur élevée de la constante de couple K, associée à la valeur du rapport de réduction du réducteur, peut permettre de ne prélever pour l'alimentation de la machine électrique qu'un courant de 1A à 2A à la source d'énergie électrique, par exemple la batterie du réseau de bord du véhicule.

La réduction de 25% à 50% de ladite valeur du couple de maintien par le choix du rapport de réduction entraine néanmoins une démultiplication de la course à parcourir au niveau du moteur pour déplacer l'actionneur de sa position de repos à la position dans laquelle il maintient le système de transmission dans l'état donné. Pour ne pas allonger le temps nécessaire au déplacement selon cette course de l'actionneur, il faudrait une machine électrique capable de tourner deux à quatre fois plus rapidement Le système de commande peut être configuré de manière à ce que la constante de couple K de la machine électrique ait au moins une valeur faible. Cette ou ces valeurs faibles peuvent correspondre à un mode de fonctionnement étant un déplacement rapide de l'actionneur, par exemple pour suivre une variation de consigne. Dans ce mode de fonctionnement de l'actionneur, le courant électrique alimentant la machine électrique est plus important. Ce mode de fonctionnement peut correspondre à un fonctionnement transitoire de l'actionneur.

Lorsque la valeur fixe du rapport de réduction est choisie comme mentionné ci-dessus, la réduction de 25% à 50% de la valeur du couple de maintien que cette valeur fixe de rapport de réduction entraîne provoque une démultiplication de la course à parcourir au niveau du moteur pour déplacer l'actionneur de sa position de repos à la position dans laquelle il maintient le système de transmission dans l'état donné. Pour ne pas allonger le temps nécessaire au déplacement selon cette course de l'actionneur, il faudrait une machine électrique capable de tourner deux à quatre fois plus rapidement. La commande des cellules de commutation de manière à ce que la constante de couple prenne la valeur faible, en permettant de faire tourner le moteur deux à quatre fois plus vite qu'avec la valeur élevée, permet de régler ce problème.

Le système de commande peut être configuré pour limiter le courant alimentant la machine électrique lors du démarrage de cette dernière, de manière à éviter un échauffement excessif dans la machine électrique ou la démagnétisation d'aimants permanents pouvant être utilisés dans la machine électrique.

Cette limitation du courant peut être ajustée en fonction de l'état thermique de la machine électrique et de la caractéristique de magnétisation des aimants permanents, cet état thermique pouvant être déterminé à partie d'une mesure de température et/ou à partir d'un modèle de température comme décrit dans le document FR 2 951 033.

Le convertisseur statique peut comprendre trois bras montés en parallèle, chaque bras comprenant deux cellules de commutation en série séparées entre elles par un point milieu, chaque point milieu permettant la connexion électrique du convertisseur au circuit électrique de l'induit.

Selon un premier exemple de mise en oeuvre de l'invention, la machine électrique est une machine à courant continu, ladite machine comprenant trois balais, chaque balai étant relié à un des points milieux du convertisseur statique. La machine électrique peut comprendre uniquement deux pôles au stator.

Selon ce premier exemple de mise en oeuvre de l'invention, les balais peuvent être disposés de manière à ce que, lorsqu'ils coopèrent avec le collecteur de la machine à courant continu :

-    lorsque le courant circule entre le premier et le deuxième balai dans le circuit électrique de l'induit, ledit courant parcourt la totalité des spires du circuit électrique de l'induit, et
-    lorsque le courant circule entre le troisième balai et l'un du premier et du deuxième balai dans le circuit électrique de l'induit, ledit courant ne parcourt qu'une partie des spires du circuit électrique de l'induit.

Ainsi, en commandant le convertisseur statique de manière à ce que le courant circule entre le premier et le deuxième balai dans le circuit électrique de l'induit, ou de manière à ce que cette circulation du courant dans le circuit électrique de l'induit se fasse entre l'un du premier et du deuxième balai et le troisième balai, on modifie le nombre de spires du circuit électrique de l'induit parcourues par ce courant.

Les spires du circuit électrique de l'induit parcourues par le courant électrique lorsqu'il circule entre le premier et le troisième balai peuvent former, avec les spires du circuit électrique de l'induit parcourues par le courant électrique lorsqu'il circule entre le deuxième et le troisième balai, une partition au sens mathématique des spires du circuit électrique de l'induit parcourues par le courant électrique lorsqu'il circule entre le premier et le deuxième balai.

Du fait que la relation entre le couple électromagnétique T exercé sur la machine à courant continu et le courant I circulant dans le circuit électrique de l'induit est

$$ T = n \times n_e \times \frac{\Phi}{2\pi} \times I $$

n étant le nombre de spires parcourues par le courant électrique dans le circuit électrique de l'induit,
$n_e$ étant le nombre d'encoches du rotor, et
$\Phi$ étant le flux magnétique dans l'entrefer de la machine à courant continu,

la constante de couple K vaut alors $n \times n_e \times \frac{\Phi}{2\pi}$.

Ainsi, selon que le courant électrique circule ou non via le troisième balai, le nombre de spires du circuit électrique de l'induit parcouru par ce courant est modifié, de sorte que la valeur de la constante de couple K est modifiée.

La constante de couple est ainsi plus élevée lorsque le convertisseur statique est commandé de manière à ce que le courant circule dans le circuit électrique de l'induit entre le premier et le deuxième balai que lorsque la circulation du courant dans le circuit électrique de l'induit fait intervenir le troisième balai.

Selon un premier sous-exemple de ce premier exemple de mise en oeuvre de l'invention, les balais sont disposés de manière à ce que, lorsqu'ils coopèrent avec le collecteur de la machine à courant continu, le courant circulant entre le troisième et le premier balai dans le circuit électrique de l'induit parcourt un nombre de spires égal à celui qu'il parcourt lorsqu'il circule entre le troisième et le deuxième balai dans le circuit électrique de l'induit.

Selon ce premier sous-exemple, le nombre de spires parcourues par le courant électrique dans le circuit électrique de l'induit est ainsi le même dès lors que le troisième balai achemine ce courant, que l'autre balai utilisé pour acheminer le courant dans le circuit électrique de l'induit soit le premier ou le deuxième balai. Dans ce cas, on obtient une première valeur de constante de couple lorsque le convertisseur statique est commandé de manière à ce que le courant circule dans le circuit électrique de l'induit entre le premier et le deuxième balai, et une deuxième valeur de constante de couple, inférieure à la première, lorsque le convertisseur statique est commandé de manière à ce que le courant circule dans le circuit électrique de l'induit entre le premier balai et le troisième balai ou entre le deuxième balai et le troisième balai.

On peut ainsi dans ce cas n'obtenir que deux valeurs possibles pour la constante de couple, de sorte qu'il existe une seule valeur élevée, correspondant au mode de fonctionnement de l'actionneur permettant le maintien en état du système de transmission ou permettant le déplacement lent de l'actionneur, et qu'il n'existe qu'une seule valeur faible, pour le mode de fonctionnement transitoire de l'actionneur.

Ce premier sous-exemple avec seulement deux valeurs distinctes pour la constante de couple de la machine électrique est adapté au cas où le couple que doit exercer l'actionneur pour amener le système de transmission de l'état accouplé à l'état désaccouplé est sensiblement du même ordre que le couple que l'actionneur doit exercer pour amener le système de transmission de l'état désaccouplé à l'état accouplé. C'est par exemple le cas lorsque le système de transmission est un synchroniseur d'une boîte de vitesses.

Selon un deuxième sous-exemple de ce premier exemple de mise en oeuvre de l'invention, les balais sont disposés de manière à ce que, lorsqu'ils coopèrent avec le collecteur de la machine à courant continu, le courant circulant entre le troisième et le premier balai dans le circuit électrique de l'induit parcourt un premier nombre de spires différent d'un deuxième nombre de spires parcourues par ledit courant lorsqu'il circule entre le troisième et le deuxième balai dans le circuit électrique de l'induit.

Selon ce deuxième sous-exemple, le nombre de spires parcourues par le courant électrique dans le circuit électrique de l'induit est différent lorsque le troisième balai achemine ce courant électrique, selon que l'autre balai utilisé pour acheminer le courant dans le circuit électrique de l'induit est le premier ou le deuxième balai. Le nombre de spires parcourues par le courant électrique dans le circuit électrique de l'induit est par exemple supérieur lorsque le courant circule entre le premier et le troisième balai que lorsque le courant circule entre le deuxième et le troisième balai.

Dans ce cas, on obtient une première valeur de constante de couple lorsque le convertisseur statique est commandé de manière à ce que le courant circule dans le circuit électrique de l'induit entre le premier et le deuxième balai, une deuxième valeur de constante de couple, inférieure à la première, lorsque le convertisseur statique est commandé de manière à ce que le courant circule dans le circuit électrique de l'induit entre le premier balai et le troisième balai, et une troisième valeur de constante de couple, inférieure à la deuxième, lorsque le convertisseur statique est commandé de manière à ce que le courant circule dans le circuit électrique de l'induit entre le deuxième balai et le troisième balai.

On peut ainsi dans ce cas obtenir trois valeurs possibles pour la constante de couple, de sorte qu'il existe une seule valeur élevée, correspondant au mode de fonctionnement de l'actionneur permettant le maintien en état du système de transmission ou permettant le déplacement lent de l'actionneur, et qu'il existe deux valeurs faibles, pour des modes de fonctionnement transitoires différents.

On positionne par exemple le troisième balai afin que, lorsque le convertisseur statique est commandé de manière à ce que le courant circule dans le circuit électrique de l'induit entre le premier balai et le troisième balai, le nombre de spires parcourues par le courant électrique soit égal à 2/3 du nombre de spires du circuit électrique de l'induit parcouru par le courant lorsqu'il circule entre le premier et le deuxième balai. Le troisième balai est également positionné de telle sorte que, lorsque le convertisseur statique est commandé de manière à ce que le courant circule dans le circuit électrique entre le deuxième balai et le troisième balai, le nombre de spires parcourues par le courant électrique soit égal à 1/3 du nombre de spires du circuit électrique de l'induit parcouru par le courant lorsqu'il circule entre le premier et le deuxième balai.

L'existence de trois valeurs distinctes pour la constante de couple de la machine à courant continu peut notamment être avantageuse lorsque le système de transmission est un embrayage simple ou double. En effet, dans un tel cas, les frottements et des phénomènes d'hystérésis ont pour conséquence que le couple que l'actionneur doit fournir n'est pas le même lorsque ce dernier doit amener l'embrayage dans l'état embrayé ou dans l'état débrayé. La possibilité d'obtenir deux valeurs de constante faibles distinctes permet ainsi un comportement dynamique satisfaisant de l'actionneur pour ces deux modes différents.

Dans le cas où le système de transmission est un embrayage simple, la deuxième valeur de la constante de couple K peut être utilisée pour amener l'embrayage dans l'état accouplé, tandis que la troisième valeur de la constante de couple K peut être utilisée pour amener l'embrayage dans l'état désaccouplé, et tandis que la première valeur de la constante de couple K peut être utilisée pour maintenir l'embrayage dans l'état désaccouplé.

Dans le cas où le système de transmission est un embrayage double, dont l'état au repos est l'état désaccouplé, la deuxième valeur de la constante de couple K, ie la valeur faible la plus grande, peut être utilisée pour amener l'embrayage dans l'état désaccouplé, tandis que la troisième valeur de la constante de couple K, ie la valeur faible la plus petite, peut être utilisée pour amener l'embrayage dans l'état accouplé, et tandis que la première valeur de la constante de couple K peut être utilisée pour maintenir l'embrayage dans l'état accouplé.

Selon ce premier exemple de mise en oeuvre de l'invention, le système de commande des cellules de commutation est configuré de manière à permettre au moins :

- de commander les cellules de commutation du convertisseur statique de manière à ce que le courant circulant dans le circuit électrique de l'induit circule également dans le premier balai, le deuxième balai, et une partie des bras aux points milieux desquels sont reliés lesdits balais, et
- de commander les cellules de commutation du convertisseur statique de manière à ce que le courant circulant dans le circuit électrique de l'induit circule également dans le troisième balai et dans l'un du premier et du deuxième balai, et une partie des bras aux points milieux desquels sont reliés lesdits balais.

L'actionneur peut comprendre un organe de mesure du courant circulant entre le point milieu d'un bras et le balai auquel il est relié, et un organe de mesure du courant circulant entre le point milieu d'un autre bras et le balai auquel il est relié. Ces organes de mesure du courant permettent une commande en boucle fermée des cellules de commutation du convertisseur statique.

Selon un deuxième exemple de mise en oeuvre de l'invention, la machine électrique est une machine synchrone et le convertisseur statique forme un onduleur triphasé. La machine synchrone peut être une machine à rotor à aimants permanents ou une machine à rotor bobiné. Il peut encore s'agit d'une machine à courant continu sans balai (désignée par « BLDC » en anglais). De telles machines sont plus robustes et peuvent présenter des performances supérieures à celles des machines à courant continu.

Dans une telle machine, la constante de couple K dépend de l'angle interne de la machine, lequel est l'angle défini entre le flux rotorique dans la machine et le flux généré par le champ tournant statorique. Le système de commande des cellules de commutation peut, selon ce deuxième exemple de mise en oeuvre de l'invention, être configuré pour appliquer une commande vectorielle aux cellules de commutation de l'onduleur triphasé, ladite commande permettant que l'angle interne de la machine prenne au moins deux valeurs distinctes.

En utilisant les transformées de Clarke et de Park, l'équation liant le couple électromagnétique exercé sur le rotor de la machine électrique et le module du vecteur courant dans le repère de Park est :

$$ T = \frac{3}{2} \times P \times \Phi \times sin\psi \times I' $$

P étant le nombre de paires de pôles du stator de la machine synchrone,

Φ étant le flux magnétique dans l'entrefer de la machine,

Ψ étant l'angle interne de la machine, et

I' étant tel que $I' = \sqrt{I_d^2 + I_q^2}$ où $I_d$ et $I_q$ sont les composants sur l'axe direct et sur l'axe en quadrature de la transformée dans le repère de Park du courant circulant dans le circuit électrique du stator.

Ainsi, en commandant le système de commande des cellules de commutation de manière à faire varier la valeur de l'angle interne ψ de la machine synchrone, c'est-à-dire en défluxant cette machine synchrone, on fait varier la valeur de la constante de couple K qui est égale à $\frac{3}{2} \times P \times \Phi \times sin\psi$

La valeur élevée de la constante de couple K est par exemple obtenue lorsque l'on commande les cellules de commutation du convertisseur statique de manière à ce que l'angle ψ soit égal à 90°.

Il peut être avantageux que le rapport entre la valeur élevée de la constante de couple et la valeur faible de ladite constante soit égal à 3, par exemple lorsque le système de transmission est un embrayage simple ou double, ou que ce rapport soit égal à 2, par exemple lorsque le système de transmission est une boîte de vitesses. La valeur faible de la constante de couple K est obtenue en commandant les cellules de commutation du convertisseur statique de manière à ce que l'angle interne de la machine soit égal à 19,3°, lorsque l'on souhaite un rapport de 3 entre les valeurs de constante de couple, et que cet angle interne soit égal à 30°, lorsque l'on souhaite un rapport de 2 entre les valeurs de constante de couple.

Le cas échéant, la commande vectorielle des cellules de commutation du convertisseur statique peut permettre que la constante de couple K prenne exactement deux ou trois, voire plus, valeurs distinctes.

Selon ce deuxième exemple de mise en oeuvre de l'invention, l'actionneur peut comprendre un organe de mesure du courant circulant une des phases du stator de la machine synchrone, et un organe de mesure du courant circulant dans une autre des phases dudit stator. Le système triphasé étant équilibré, la connaissance du courant dans deux des phases permet de déterminer l'ensemble des courants statoriques. On peut ainsi réaliser une commande vectorielle en boucle fermée.

La machine synchrone peut être associée à trois capteurs à effet Hall disposés à 120°.

Selon les deux exemples de mise en oeuvre de l'invention ci-dessus, le système de commande peut être configuré de manière à appliquer une commande auxiliaire lorsqu'il reçoit une information relative à l'existence d'une défaillance. Cette commande auxiliaire peut agir sur les cellules de commutation du convertisseur statique de manière à ce que la cellule de commutation de chaque bras reliant le point milieu et l'entrée continue positive du convertisseur statique soit non passante, et à ce que la cellule de commutation de chaque bras reliant le point milieu et l'entrée continue négative du convertisseur statique soit passante. La machine électrique est alors déconnectée de la source d'énergie électrique, étant au contraire bouclée sur elle-même. On accroît ainsi la sûreté de l'actionneur puisque le moteur de ce dernier est freiné s'il est entraîné par la charge, comme cela se produit dans le cas où le système de transmission est un embrayage simple avec un état au repos accouplé, et qui est dans l'état désaccouplé lorsque la défaillance se produit. Un décollage brutal non souhaité du véhicule est ainsi évité et/ou minimisé.

Dans le cas par exemple où la défaillance concerne une des cellules de commutation reliant le point milieu d'un bras à l'entrée continue positive du convertisseur statique, cette cellule de commutation étant bloquée en mode passant, la commande auxiliaire peut alors :

- commander les autres cellules de commutation reliant les autres points milieux à l'entrée continue positive du convertisseur de manière à ce qu'elles soient passantes, et
- commander les cellules de commutation reliant les points milieux à l'entrée continue négative du convertisseur statique de manière à ce qu'elles soient non passantes,

afin de réaliser la fonction de freinage.

Lorsque la défaillance concerne une cellule de commutation reliant un point milieu à l'entrée continue négative du convertisseur statique et que cette cellule est bloquée en mode passant, une commande symétrique de celle qui vient d'être décrite peut être appliquée.

Lorsque la défaillance concerne une des cellules de commutation et que cette dernière est bloquée à l'état non passant, la commande auxiliaire peut se faire en commandant les cellules de commutation reliées à l'entrée continue du convertisseur statique à laquelle la cellule de commutation victime de la défaillance n'est pas reliée..

En variante, et notamment dans le cas où le système de transmission est un double embrayage dont l'état au repos est l'état désaccouplé, la commande auxiliaire peut consister à rendre non passant l'ensemble des cellules de commutation du convertisseur statique, afin d'accélérer le passage du système de transmission dans l'état désaccouplé.

Dans tout ce qui précède, la défaillance peut se rapporter à l'actionneur, au système de transmission, plus globalement à la chaîne de propulsion du véhicule, voire même plus globalement au véhicule.

Dans tout ce qui précède, lorsque la machine électrique est tournante, l'actionneur peut comprendre un organe de mesure de la position angulaire du rotor de la machine électrique tournante.

L'invention n'est pas limitée aux exemples de machines électriques mentionnés ci-dessus. Elle s'applique également à des actionneurs pour systèmes de transmission fonctionnant à l'aide d'une machine asynchrone, d'une machine à reluctance variable ou synchroreluctante, ou d'une machine synchrone auto-pilotée.

L'invention a encore pour objet, selon un autre de ses aspects, un actionneur pour système de transmission de véhicule, comprenant :

- une machine électrique,
- un convertisseur statique comprenant une pluralité de cellules de commutation, le convertisseur statique étant disposé de manière à relier électriquement le circuit électrique de l'induit à une source d'énergie électrique, et
- un système de commande des cellules de commutation du convertisseur statique, ledit système étant configuré de manière à permettre un defluxage de la machine électrique pour que la constante de couple de ladite machine électrique puisse prendre au moins deux valeurs distinctes.

Tout ou partie des caractéristiques mentionnées ci-dessus s'applique à cet autre aspect de l'invention

L'invention a encore pour objet, selon un autre de ses aspects, un ensemble, comprenant :

- un actionneur tel que défini ci-dessus, et
- un système de transmission de véhicule, ledit système comprenant un organe apte à être déplacé par l'actionneur.

L'actionneur peut comprendre un élément d'actionnement configuré pour déplacer ledit organe du système de transmission

L'organe apte à être déplacé par l'actionneur peut être un diaphragme d'embrayage ou un cylindre émetteur, par exemple.

Le système de transmission peut être l'un embrayage à sec, d'un double embrayage à sec et d'un synchroniseur de boîte de vitesses.

L'invention a encore pour objet, selon un autre de ses aspects, un procédé de commande d'un actionneur tel que défini ci-dessus, procédé dans lequel la commande des cellules de commutation du convertisseur statique permet que la valeur de la constante de couple prenne au moins une valeur élevée et au moins une valeur faible.

Le procédé peut comprendre l'étape selon laquelle on commande les cellules de commutation de manière à ce que la constante de couple prenne la valeur élevée lorsque l'actionneur maintient le système de transmission dans un état donné.

Cet état donné peut être l'état accouplé ou dans l'état désaccouplé du système de transmission. Le maintien du système de transmission dans cet état par l'actionneur se traduit pour l'actionneur par le fait que la consigne de position de ce dernier n'évolue plus et par le fait que son déplacement est terminé.

Lorsque le système de transmission est un embrayage simple ou double dont l'état au repos est l'état accouplé, les cellules de commutation peuvent être commandées de manière à ce que la constante de couple prenne la valeur élevée pour que l'actionneur maintienne le système de transmission dans l'état désaccouplé.

Lorsque le système de transmission est un embrayage simple ou double dont l'état au repos est l'état désaccouplé, les cellules de commutation peuvent être commandées de manière à ce que la constante de couple prenne la valeur élevée pour que l'actionneur maintienne le système de transmission dans l'état accouplé.

Le procédé peut comprendre l'étape selon laquelle on commande les cellules de commutation de manière à ce que la constante de couple prenne la valeur faible pour déplacer l'actionneur. Cette étape peut être effectuée à la réception d'une consigne de déplacement et peut permettre de modifier l'état du système de transmission.

Comme mentionné précédemment, le système de commande peut être configuré de manière à ce que la constante de couple puisse prendre une seule valeur élevée et au moins deux, notamment seulement deux, valeurs faibles. Le système de transmission peut être un embrayage, et les cellules de commutation peuvent être commandées de manière à ce que la constante de couple prenne l'une des valeurs faibles pour amener le système de transmission dans l'état désaccouplé et les cellules de commutation peuvent être commandées de manière à ce que la constante de couple prenne l'autre des valeurs faibles pour amener le système de transmission dans l'état accouplé.

Dans le cas où le système de transmission est un embrayage simple dont l'état au repos est l'état accouplé, la valeur faible la plus grande de la constante de couple peut être utilisée pour amener l'embrayage dans l'état accouplé, tandis que la valeur faible la plus petite de la constante de couple peut être utilisée pour amener l'embrayage dans l'état désaccouplé.

Dans le cas où le système de transmission est un embrayage double, la valeur faible la plus grande de la constante de couple peut être utilisée pour amener l'embrayage dans l'état désaccouplé, tandis que la valeur faible la plus petite de la constante de couple peut être utilisée pour amener l'embrayage dans l'état accouplé.

Comme mentionné précédemment, le système de commande peut être configuré de manière à ce que la constante de couple puisse prendre une seule valeur élevée et une seule valeur faible. C'est par exemple le cas où le système de transmission est un synchroniseur de boîte de vitesses, auquel cas la commande des cellules de commutation de manière à ce que la constante de couple prenne la valeur élevée peut correspondre à la phase de synchronisation dudit synchroniseur. Cette phase peut consister à synchroniser les vitesses en amont et en aval dudit synchroniseur.

Toujours lorsque le système de transmission est un synchroniseur de boîte de vitesses, la commande des cellules de commutation de manière à ce que la constante de couple prenne la valeur faible peut correspondre aux phases de déplacement hors phase de synchronisation dudit synchroniseur.

Selon le procédé ci-dessus, le système de commande peut être configuré de manière à appliquer une commande auxiliaire aux cellules de commutation lorsque ce système de commande reçoit une information relative à l'existence d'une défaillance.

Le système de transmission est par exemple un embrayage simple ou double, dont l'état au repos est l'état accouplé, la commande auxiliaire peut agir sur les cellules de commutation du convertisseur statique de manière à ce que :

- la cellule de commutation de chaque bras reliant le point milieu et l'entrée continue positive, respectivement négative, du convertisseur statique soit non passante, et
- la cellule de commutation de chaque bras reliant le point milieu et l'entrée continue négative, respectivement positive, du convertisseur statique soit passante, de manière à freiner la machine électrique lorsqu'elle est entraînée par la charge du système de transmission.

En variante, le système de transmission est un embrayage simple ou double, dont l'état au repos est l'état désaccouplé, et la commande auxiliaire agit sur les cellules de commutation du convertisseur statique de manière à rendre non passant l'ensemble desdites cellules de commutation du convertisseur statique, afin de ne pas freiner la machine électrique lorsqu'elle est entraînée par la charge du système de transmission.

L'invention pourra être mieux comprise à la lecture d'exemples non limitatifs de mise en oeuvre de celle-ci et à l'examen du dessin annexé sur lequel :

- la figure 1 est une représentation cinématique d'un ensemble comprenant un actionneur selon un exemple de mise en oeuvre de l'invention et le système de transmission avec lequel il interagit,

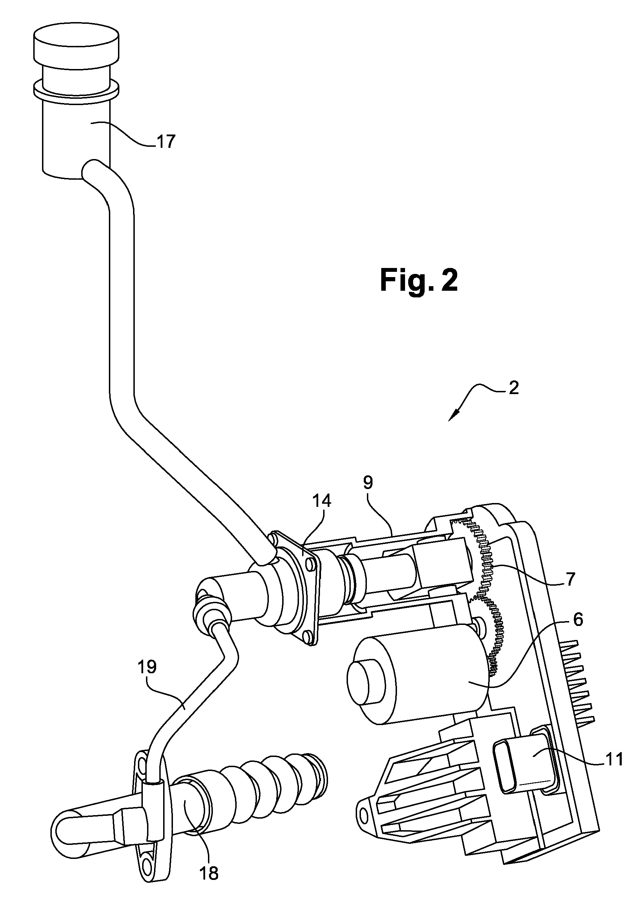

- la figure 2 est une vue en élévation de l'ensemble de la figure 1,
- la figure 3 représente un exemple de carte électronique utilisée pour la réalisation d'un actionneur selon un exemple de mise en oeuvre de l'invention,
- la figure 4a représente un convertisseur statique permettant l'alimentation électrique d'une machine à courant continu et ladite machine à courant continu selon l'art antérieur, et la figure 4b est un graphe représentant la vitesse de la machine et le courant alimentant cette dernière, en fonction du couple électromagnétique appliqué sur la machine,
- la figure 5a représente un convertisseur statique permettant l'alimentation électrique d'une machine à courant continu et ladite machine d'un actionneur selon un premier sous-exemple d'un premier exemple de mise en oeuvre de l'invention, et la figure 5b est un graphe représentant la vitesse de la machine et le courant alimentant cette dernière, en fonction du couple électromagnétique appliqué sur la machine,

- la figure 6a représente un convertisseur statique permettant l'alimentation électrique d'une machine à courant continu et ladite machine d'un actionneur selon un deuxième sous-exemple du premier exemple de mise en oeuvre de l'invention, et la figure 6b est un graphe représentant la vitesse de la machine et le courant alimentant cette dernière, en fonction du couple électromagnétique appliqué sur la machine,
- la figure 7 complète la figure 5a ou la figure 6a en y ajoutant un système de commande du convertisseur statique,
- la figure 8 représente un système de commande, un convertisseur statique et une machine synchrone d'un actionneur selon un deuxième exemple de mise en oeuvre de l'invention,
- la figure 9 représente sous forme de schémas blocs un procédé de commande de l'actionneur selon les deux exemples de mise en oeuvre décrits ci-dessus,
- la figure 10 permet de visualiser simultanément la position de l'actionneur et l'alimentation électrique de la machine électrique de cet actionneur, et
- la figure 11 est un graphe représentant différentes grandeurs illustrant l'effet des premier et deuxième exemples de mise en oeuvre de l'invention.

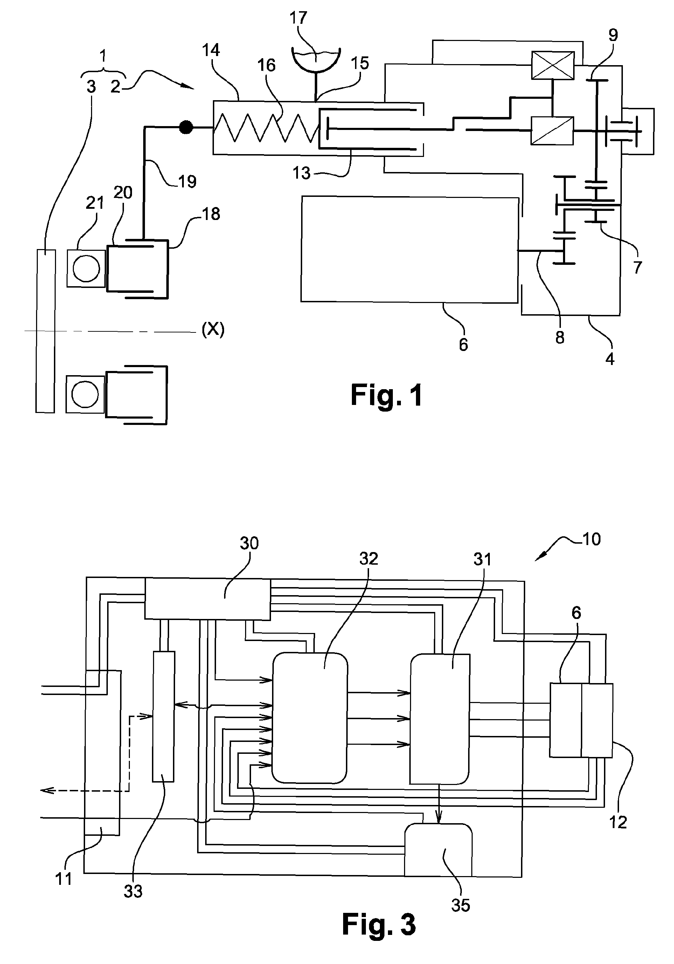

On a représenté sur la figure 1 un ensemble 1 comprenant un actionneur 2 interagissant avec un système de transmission 3. Dans l'exemple de la figure 1, le système de transmission 3 est un embrayage simple.

L'actionneur 2 comprend dans cet exemple un boîtier 4 coopérant avec le carter d'une machine électrique 6. Le boîtier peut être fixé sur le groupe moto-propulseur ou sur le châssis d'un véhicule.

Le boîtier 4 peut recevoir un réducteur 7 entraîné en rotation par l'arbre de sortie 8 de la machine électrique 6, et un système 9 de transformation de mouvement roto-linéaire. Le réducteur 7 présente ici un rapport de transmission fixe. Le réducteur 7 peut comprendre un ou deux étages de réduction. La valeur du rapport de transmission du réducteur est dans l'exemple considéré déterminée en fonction de l'effort maximal imposé par le système de transmission 3 sur l'actionneur 2, de manière à réduire le couple électromagnétique devant être appliqué au rotor de la machine électrique 6 lorsqu'elle maintient le système de transmission 3 dans un état donné.

Le boîtier 4 contient aussi dans l'exemple considéré une carte électronique 10 permettant de commander le fonctionnement de la machine électrique 6 de manière à ce que l'actionneur 2 puisse présenter au moins deux modes de fonctionnements distincts. Comme on le verra par la suite, cette commande consiste à modifier la constante de couple de la machine électrique 6 de manière à ce que celle-ci puisse prendre au moins deux valeurs distinctes.

Un connecteur 11 est également porté par le boîtier 4, pour permettre la connexion électrique de la carte électronique 10 à une source d'énergie électrique qui est par exemple la batterie du réseau de bord du véhicule. Le connecteur 11 peut également permettre de connecter la carte électronique 10 au bus CAN (Controller Area Network) du véhicule. On permet ainsi la commande de la machine électrique 6 à partir de l'unité de contrôle moteur (ECU) du véhicule, cette dernière mettant notamment en oeuvre un logiciel de supervision du système de transmission 3.

Le boîtier peut aussi recevoir un capteur 12 de position d'un élément mobile de l'actionneur 2, par exemple un capteur de position du rotor de la machine électrique 6. Ce capteur 12 peut ou non être porté par la carte électronique 10. La partie de traitement de ce capteur est par exemple portée par la carte 10 tandis que la partie de mesure de ce capteur 12 est disposée au niveau du rotor de la machine électrique 6.

Le système 9 de transformation de mouvement roto-linéaire est par exemple une vis à billes, une vis écrou ou une vis à roulements planétaires. Le système 9 peut ainsi être tel que décrit dans la demande déposée par la Demanderesse le 2 octobre 2013 en France sous le numéro 13 59544 dont le contenu est incorporé à la présente demande par référence.. Le système 9 permet, à partir du mouvement rotatif transmis par le réducteur 7, de déplacer en translation un piston 13 d'un cylindre émetteur 14 permettant de modifier l'état de l'embrayage 3.

Le déplacement de ce piston 13 sur une première course, dite course morte, met à découvert un orifice 15 qui relie la chambre 16 du cylindre émetteur 14 à un réservoir hydraulique basse pression 17. Le déplacement du piston 13 sur une deuxième course, dite course active, permet de recouvrir cet orifice, de sorte que le fluide contenu dans la chambre 16 du cylindre émetteur 14 peut être déplacé par le piston 13 vers un cylindre récepteur 18, via une canalisation hydraulique 19. Le cylindre récepteur 18 de l'exemple considéré comprend un piston annulaire 20 coaxial à l'axe de rotation X de l'embrayage 3. Ce piston annulaire 20 est dans l'exemple considéré relié à un roulement à billes 21 qui vient déplacer en translation selon l'axe X le diaphragme de l'embrayage 3, par exemple via une fourchette.

La figure 3 représente de façon fonctionnelle la carte électronique 10. Comme représenté sur la figure 3, la carte électronique 10 intègre des moyens de commande de la machine électrique 6 et, dans l'exemple considéré, elle coopère avec le capteur 12 qui est externe à la carte 10.

La carte 10 est reliée au connecteur 11 qui, comme déjà mentionné, permet l'acheminement à la carte à la fois de signaux de puissance et de signaux de commande.

La carte 10 comprend dans l'exemple considéré un module 30 de gestion des alimentations électriques de la carte 10. Ce module 30 est électriquement alimenté via le connecteur 11 par une source d'énergie électrique du véhicule, par exemple la batterie du réseau de bord. Le module 30 est, comme représenté, configuré pour générer des signaux de puissance permettant d'alimenter électriquement les différents composants de la carte 10, ainsi que le capteur de position 12 du rotor de la machine électrique 6.

La carte 10 peut encore comprendre, comme représenté sur la figure 3, un convertisseur statique 31, un système de commande 32 du convertisseur statique 31, un module de gestion 33 de la communication sur le bus CAN, et un capteur 35 du courant dans la machine électrique 6. Le module 30 peut générer des signaux de puissance de valeur différente pour ces différents composants 31 à 35.

Le convertisseur statique 31 comprend dans l'exemple considéré trois bras 40 montés en parallèle, chaque bras 40 étant monté entre une entrée continue positive 47 et une entrée continue négative 48 du convertisseur statique 31. Chaque bras 40 comprend deux cellules de commutation 41 en série séparées entre elles par un point milieu 42, chaque point milieu 42 permettant la connexion électrique du convertisseur 31 au circuit électrique de l'induit de la machine électrique 6 via une branche 44. Chaque cellule de commutation peut former un interrupteur bidirectionnel en courant, étant par exemple formée par un transistor à effet de champ.

Le convertisseur statique 31 est configuré pour alimenter électriquement l'induit de la machine électrique à partir de la puissance électrique fournie par le module 30 de gestion des alimentations électriques de la carte 10.

Le système de commande 32 du convertisseur statique 31 comprend par exemple un ou plusieurs microcontrôleurs. Ce ou ces microcontrôleurs sont configurés pour communiquer avec d'autres éléments de la carte électronique 10. Ils sont par exemple configurés pour recevoir et traiter des données en provenance du capteur de position 12 du rotor de la machine électrique 6. Ces données sont par exemple transmises sous forme analogique ou sous forme de valeurs de rapport cyclique. Le traitement de ces données par le système de commande 32 peut permettre de réaliser une commande en boucle fermée de l'actionneur 2 par exemple en courant et/ou en position et/ou en effort.

Le système de commande 32 peut en outre recevoir et traiter des données du capteur 35 du courant dans la machine électrique 6, ainsi que d'autres capteurs éventuels portés par la carte 10, notamment des capteurs effectuant des mesures de température, de tension d'alimentation. Le système de commande 32 peut encore recevoir et traiter des données provenant de capteurs externes à la carte et dont les mesures sont acheminées au système de commande 32 via le connecteur 11 et le module de gestion 33.

Le système de commande 32 peut également recevoir et traiter, via le connecteur 11 et le module de gestion 33, d'autres informations relatives à la commande de l'actionneur 2, par exemple issues de l'ECU, qui sont alors décodées par ce système de commande 32.

Dans le cas où l'actionneur 2 interagit avec un embrayage, les mesures ainsi acheminées via le connecteur 11 peuvent comprendre des mesures de vitesse d'entrée d'une boîte de vitesse du véhicule. Dans le cas où l'actionneur 2 est un actionneur de passage ou de sélection de vitesses, les mesures acheminées via le connecteur 11 peuvent comprendre des mesures de température d'huile de régime secondaire ou des mesures de position d'un levier de passage des vitesses.

Le système de commande 32 peut également envoyer des données via le module de gestion 33 et le connecteur 11 vers l'extérieur de la carte électronique 10.

Afin de réaliser les différentes communications ci-dessus, le système de commande 32 du convertisseur statique 31 peut présenter des entrées analogiques, des entrées logiques, des sorties analogiques ainsi que des sorties gérant des signaux logiques ou des valeurs de rapport cyclique pour commander les cellules de commutation 41 du convertisseur statique 31.

Le module de gestion 33 comprend des éléments électroniques configurés pour gérer la communication sur un bus réseau multiplexé et pour transmettre des informations véhiculées par la liaison au système de commande 32.

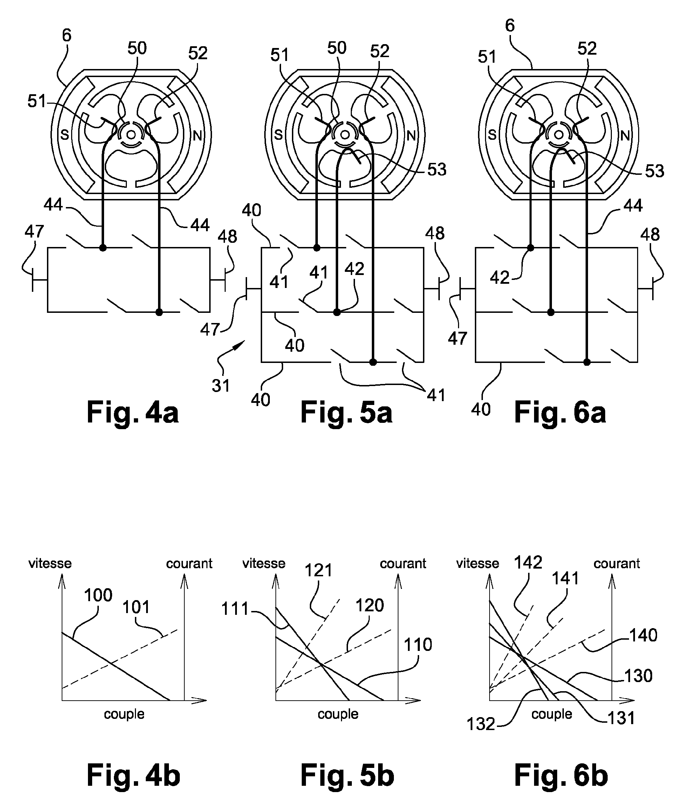

On va maintenant décrire plus précisément en référence aux figures 4 à 7 un actionneur 2 selon un premier exemple de mise en oeuvre de l'invention.

Selon ce premier exemple de mise en oeuvre de l'invention, la machine électrique est un moteur à courant continu comprenant deux pôles au stator, chacun de ces pôles étant formé par un aimant permanent. Le circuit électrique de l'induit, qui est ici le rotor, est relié via un collecteur 50 et des balais 51 et 52 au point milieu 42 de chaque bras 40. Plus précisément, chaque balai 51 ou 52 permet la connexion via une branche 44 à un point milieu 42 d'un bras 40. Toujours selon ce premier exemple de mise en oeuvre de l'invention, le convertisseur statique 31 est un convertisseur de tension continu/continu.

Dans l'exemple de la figure 4, seuls deux balais 51 et 52 sont prévus, et le courant circulant dans le circuit électrique du rotor entre ces deux balais parcourt la totalité de spires de ce circuit électrique du rotor. Pour une telle machine, une relation proportionnelle existe entre le couple électromagnétique T appliqué sur le rotor de la machine et le courant I parcourant le circuit électrique du rotor, le coefficient de proportionnalité K étant appelé « constante de couple ». La relation est :

$$T = n \times n_e \times \frac{\Phi}{2\pi} \times I$$

n étant le nombre de spires parcourues par le courant électrique dans le circuit électrique de l'induit,

$n_e$ étant le nombre d'encoches du rotor,

Φ étant le flux magnétique dans l'entrefer de la machine à courant continu,

La constante de couple K vaut alors

$$n \times n_e \times \frac{\Phi}{2\pi}.$$

Dans le cas où la machine électrique 6 et le convertisseur statique 31 sont tels que représentés sur la figure 4a, la valeur de K est constante, de sorte qu'il existe une seule courbe 100 visible sur la figure 4b représentant la vitesse de la machine en fonction du couple mécanique exercé par le système de transmission 3 sur la machine électrique 6 et une seule courbe 101 visible sur cette même figure et représentant le courant parcourant le circuit électrique du rotor en fonction du couple T. On constate notamment qu'un actionneur 2 comprenant un tel convertisseur 31 et une telle machine électrique 6 permet d'avoir un courant I nécessaire au maintien en position de l'actionneur 2 relativement faible mais que la vitesse de déplacement d'un tel actionneur n'est pas satisfaisante.

Pour remédier à cet inconvénient, l'invention propose, selon le premier exemple de mise en oeuvre de l'invention, d'ajouter un troisième balai 53 et un troisième bras 40 au convertisseur statique 31. Ce dernier se présente alors sous la forme de trois demi-ponts en H. L'ajout d'un troisième balai 53 permet de faire varier le nombre de spires du circuit électrique du rotor parcourues par le courant électrique I entre deux points milieux 42 du convertisseur statique 31.

Le premier 51 et le deuxième balais 52 sont ici disposés de la même façon que les deux balais décrits en référence aux figures 4a et 4b, c'est-à-dire que lorsque le courant I circule entre le premier 51 et le deuxième 52 balai dans le circuit électrique du rotor, ce courant parcourt la totalité des spires de ce circuit électrique.

Le troisième balai 53 est disposé de telle sorte que lorsque le courant I circule entre le troisième balai 53 et l'un du premier 51 et du deuxième 52 balai dans le circuit électrique du rotor, ce courant ne parcourt qu'une partie des spires du circuit électrique du rotor. Ainsi, selon la commande appliquée par le système de commande 32 aux cellules de commutation 41 du convertisseur statique 31, la courant alimentant l'enroulement électrique du rotor est acheminé par le troisième balai 53, de sorte que l'on peut modifier la constante de couple K de la machine électrique 6 en modifiant le nombre de spires parcourues dans le circuit électrique du rotor par ce courant. La constante de couple K est alors plus élevée lorsque le convertisseur statique 31 est commandé de manière à ce que le courant circule dans le circuit électrique du rotor entre le premier 51 et le deuxième 52 balai que lorsque la circulation du courant dans le circuit électrique du rotor fait intervenir le troisième balai 53.

On va décrire en référence aux figures 5a et 5b un premier sous-exemple de ce premier exemple de mise en oeuvre de l'invention. Selon ce premier sous-exemple, le troisième balai 53 est disposé de manière à ce que, lorsqu'il coopère avec le collecteur 50 de la machine à courant continu 6, le courant I circulant entre le troisième 53 et le premier 51 balai dans le circuit électrique du rotor parcourt un nombre de spires égal à celui qu'il parcourt lorsqu'il circule entre le troisième 53 et le deuxième balai 52 dans le circuit électrique du rotor. Le nombre de spires parcourues par le courant lorsque le troisième balai 53 achemine ledit courant est ici égal à la moitié du nombre total de spires dans le circuit électrique du rotor qui est parcouru par le courant I entre le premier 51 et le deuxième 52 balai.

Comme on peut le voir sur la figure 5b, il existe deux courbes 110 et 111 visibles sur la figure 4b représentant la vitesse de la machine en fonction du couple T, et deux courbes 120 et 121 visibles sur cette même figure et représentant le courant parcourant le circuit électrique du rotor en fonction du couple T. Les courbes 110 et 120, qui correspondent à la commande du convertisseur statique 31 de manière à de que le courant électrique parcourant le circuit électrique du rotor circule entre le premier 51 et le deuxième 52 balai, sont respectivement identiques aux courbes 100 et 101 de la figure 4b. Ces courbes correspondent à une commande de la machine électrique de manière à ce que l'actionneur 2 soit dans un mode de fonctionnement dans lequel il maintient en état le système de transmission 3 ou dans lequel il se déplace lentement.

Les courbes 111 et 121 traduisent l'existence dans ce cas d'une deuxième valeur de constante de couple plus faible que la valeur élevée de la constante de couple du cas de la figure 4. Lorsque la commande du convertisseur statique 31 permet que cette valeur plus faible de constante de couple soit obtenue, on constate que le déplacement de l'actionneur 2 est plus rapide, bien que le courant nécessaire au maintien en position de l'actionneur 2 soit plus élevé. Les courbes 111 et 121 correspondent à un mode de fonctionnement transitoire de l'actionneur 2.

On va maintenant décrire en référence aux figures 6a et 6b un deuxième sous-exemple du premier exemple de mise en oeuvre de l'invention. Selon ce deuxième sous-exemple, le troisième balai 53 est disposé de manière à ce que le courant I circulant entre le troisième 53 et le premier 51 balai dans le circuit électrique du rotor parcoure un premier nombre $n_1$ de spires différent d'un deuxième nombre $n_2$ de spires qu'il parcourt lorsqu'il circule entre le troisième 53 et le deuxième 52 balai dans ledit circuit électrique.

Le premier nombre $n_1$ de spires est par exemple supérieur au nombre $n_2$ de spires. Le premier nombre $n_1$ est par exemple égal à 2/3 du nombre de spires total de l'enroulement électrique du rotor que le courant parcourt entre le premier 51 et le deuxième 52 balai, tandis que le deuxième nombre $n_2$ est égal à 1/3 dudit nombre de spires total. Aux valeurs $n_1$ et $n_2$ correspondent res-

pectivement deux valeurs faibles de constante de couple K, l'une étant plus petite que l'autre.

Selon ce deuxième sous-exemple, on obtient :

- une valeur élevée de la constante de couple K lorsque le convertisseur statique 31 est commandé de manière à ce que le courant I circule dans le circuit électrique du rotor entre le premier 51 et le deuxième 52 balai,
- une première valeur faible de la constante de couple K lorsque le convertisseur statique 31 est commandé de manière à ce que le courant I circule dans le circuit électrique du rotor entre le premier balai 51 et le troisième balai 53, et
- une deuxième valeur faible de la constante de couple K, plus petite que la première valeur faible, lorsque le convertisseur statique 31 est commandé de manière à ce que le courant I circule dans le circuit électrique du rotor entre le deuxième balai 52 et le troisième balai 53.

On peut ainsi dans ce cas obtenir trois valeurs possibles pour la constante de couple.

Comme on peut le voir sur la figure 6b, il existe trois courbes 130, 131 et 132 représentant la vitesse de la machine en fonction du couple T, et trois courbes 140, 141 et 142 représentant le courant parcourant le circuit électrique du rotor en fonction du couple T. Les courbes 130 et 140, qui correspondent à la commande du convertisseur statique 31 de manière à de que le courant électrique parcourant le circuit électrique du rotor circule entre le premier 51 et le deuxième 52 balai, sont respectivement identiques aux courbes 100 et 101 de la figure 4b. Ces courbes correspondent à une commande de la machine électrique de manière à ce que l'actionneur 2 soit dans un mode de fonctionnement dans lequel il maintient en état le système de transmission 3 ou dans lequel il se déplace lentement.

Les courbes 131et 141 traduisent l'existence dans ce cas d'une première valeur de constante de couple faible, tandis que les courbes 132 et 142 traduisent l'existence d'une deuxième valeur de constante de couple faible. Ces deux couples de courbe correspondent à des configurations dans lesquelles l'actionneur 2 se déplace rapidement, en transitoire.

La présence de deux valeurs faibles pour la constante de couple K permet de traiter de façon satisfaisante le cas où le sens de déplacement de l'actionneur 2 impose des contraintes particulières au couple que ce dernier doit exercer sur le système de transmission 3. Chaque valeur faible de la constante de couple K peut alors être dédiée à un sens de déplacement de l'actionneur 2.

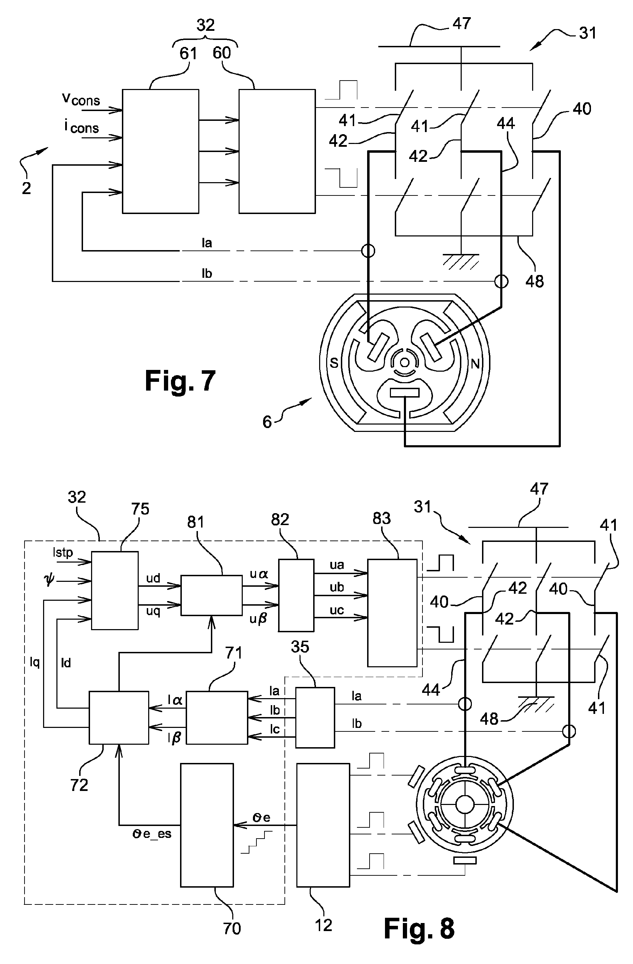

La figure 7 représente le système de commande 32, le convertisseur statique 31, et la machine à courant continu de l'exemple de la figure 5 ou de l'exemple de la figure 6. Le système de commande 32 comprend ici un circuit de commande 60 générant pour certaines cellules de commutation 41 un niveau de tension à appliquer à ladite cellule, de façon à modifier le parcours du courant dans le circuit électrique du rotor. Ce circuit de commande 60 reçoit en entrée des valeurs de rapport cyclique, l'identification des cellules de commutation 41 à commander, et le cas échéant, la direction souhaitée pour le déplacement de l'actionneur 2. Sur la base de ces entrées, le circuit de commande 60 détermine les niveaux de tension à appliquer aux cellules de commutation 41 concernées.

Selon les consignes générées, un quadruplet de cellules de commutation 41, c'est-à-dire les cellules de commutation 41 de deux des bras 40, est commandé pour obtenir le mode de fonctionnement souhaité de l'actionneur 2. Si l'on souhaite par exemple que l'actionneur 2 se déplace, on commandera ainsi les cellules de commutation 41 entourant le point milieu 42 relié au troisième balai 53 et les cellules de commutation entourant l'un du point milieu 42 relié au premier balai 51 et du point milieu 42 entourant le deuxième balai 42.

Le système de commande 32 comprend encore dans l'exemple considéré un contrôleur de courant 61 recevant en entrée :

- une consigne de vitesse pour l'actionneur 2,
- une consigne de courant dans le circuit électrique du rotor, et
- les valeurs de courant dans au moins deux branches 44, mesurées à l'aide du capteur 35 déjà mentionné.

Sur la base de ces entrées, le contrôleur de courant 61 génère les consignes pour le circuit de commande 60.

On va maintenant décrire en référence à la figure 8 un deuxième exemple de mise en oeuvre de l'invention. Selon ce deuxième exemple, la machine électrique 6 est une machine synchrone qui est ici à rotor à aimants permanents. Le convertisseur statique 31 est ici un onduleur triphasé, chaque bras 40 étant associé à la commande d'une phase du circuit électrique de l'induit, qui est ici le stator.

Le système de commande 32 est configuré pour appliquer au convertisseur statique 31 une commande vectorielle. Pour cela, les transformées de Clarke et de Park, connues de l'homme du métier, sont utilisées.

L'équation liant le couple électromagnétique exercé sur le rotor de la machine électrique et le module du vecteur courant dans le repère de Park est :

$$T = \frac{3}{2} \times P \times \Phi \times sin\psi \times I'$$

P étant le nombre de paires de pôles du stator de la machine synchrone,

Φ étant le flux magnétique dans l'entrefer de la machine,

Ψ étant l'angle interne de la machine, c'est-à-dire l'angle défini entre le flux rotorique dans la machine et le flux généré par le champ tournant statorique, et

I' étant tel que $I' = \sqrt{I_d^2 + I_q^2}$ où $I_d$ et $I_q$ sont les composants sur l'axe direct et sur l'axe en quadrature de la transformée dans le repère de Park du courant circulant dans le circuit électrique du stator.

Comme on peut le voir sur la figure 8, le système de commande 32 interagit ici avec le capteur de position 12, qui est dans l'exemple considéré un capteur à effet Hall, et avec le capteur de courant 35 qui permet de déterminer la valeur du courant dans deux des phases du circuit électrique du stator. Le système triphasé étant ici équilibré, on peut déduire la valeur du courant dans la dernière phase du circuit électrique du stator, de sorte que l'on connaît la valeur du courant dans chaque phase du stator.

Dans cet exemple, le système de commande 32 est configuré pour recevoir et traiter les données issues de ces capteurs 12 et 35. Le système de commande 32 comprend un observateur 70 à entrée inconnue, recevant les valeurs transmises par le capteur à effet Hall. La sortie de cet observateur 70 est une mesure précise de l'angle électrique du rotor.

On applique via un bloc 71 la transformée de Clarke au courant dans chaque phase de la machine électrique 6, puis les sorties de ce bloc 72 sont reçues en entrée d'un bloc 73 qui, à l'aide de la valeur de l'angle électrique du rotor fournie par l'observateur 70, applique à ces sorties la transformée de Park. Les composantes dans le référentiel de Park du courant I circulant dans l'enroulement électrique du stator sont alors reçues en entrée d'un contrôleur de courant 75 qui reçoit également comme entrée une valeur de consigne pour l'angle interne $\Psi$ de la machine et une valeur $I_{sp}$ de consigne de courant dans le circuit électrique du stator, par exemple acheminée via la liaison CAN.

Sur la base d'une comparaison entre les valeurs de consigne et les valeurs issues des mesures effectuées par les capteurs 12 et 35, le contrôleur de courant 75 détermine les composantes $U_d$ et $U_q$ dans le référentiel de Park de la tension de commande de la machine électrique 6.

La tension de commande ainsi déterminée par ce contrôleur de courant vise à faire varier l'angle interne $\Psi$ de la machine. Etant donné que la constante de couple K est dans cet exemple égale à $\frac{3}{2} \times P \times \Phi \times sin\psi$, en faisant varier la valeur de cet angle interne, c'est-à-dire en défluxant la machine synchrone 6, on fait varier la valeur de la constante de couple de la machine 6, et donc on peut choisir la valeur de cette constante la mieux adaptée au mode de fonctionnement souhaité de l'actionneur 2.

On peut par exemple defluxer ou non la machine électrique 6 selon que l'on souhaite que l'actionneur 2 soit :

- dans un mode de fonctionnement dans lequel l'actionneur 2 se déplace rapidement, ou
- dans un mode de fonctionnement dans lequel l'actionneur 2 se déplace lentement ou dans lequel il maintient le système de transmission 3 dans un état donné.

On commande par exemple l'onduleur 31 de manière à ce que l'angle interne $\Psi$ ait une valeur de 90° lorsque l'on souhaite obtenir un maintien ou un déplacement lent de l'actionneur, et on commande l'onduleur 31 de manière à réduire la valeur de cet angle interne lorsque l'on souhaite obtenir un déplacement rapide de l'actionneur 2.

A un angle interne $\Psi$ égal à 90° correspond une valeur élevée de la constante de couple K, tandis que lorsque l'angle interne $\Psi$ est inférieur à 90°, par exemple égal à 30°, la constante de couple K a une valeur faible. Le cas échéant, le défluxage de la machine électrique 6 peut permettre d'obtenir plusieurs valeurs faibles distinctes.

Deux blocs 81 et 82 appliquent ensuite successivement à cette tension de commande les transformées inverses de Park et de Clarke pour obtenir les tensions de commande de chaque phase de la machine électrique 6. Un circuit de commande 83 génère sur la base de ces tensions de commande les valeurs de rapport cyclique à appliquer aux cellules de commutation de l'onduleur 31 de manière à appliquer ces tensions de commande à chaque phase de la machine électrique.

Le système de commande 32 des exemples de mise en oeuvre de l'invention décrits ci-dessus peut être configuré de manière à appliquer une commande auxiliaire lorsqu'une défaillance survient. Cette défaillance peut être interne à l'actionneur 2, ou affecter le système de transmission 3, ou plus globalement affecter un élément de la chaîne de propulsion du véhicule ou plus globalement affecter un élément du véhicule.

Lorsque le système de transmission 3 est un embrayage simple, cette commande auxiliaire consiste par exemple à agir sur les cellules de commutation du convertisseur statique 31 de manière à ce que la cellule de commutation 41 de chaque bras 40 reliant le point milieu 42 et l'entrée continue positive 47 du convertisseur 31 soit non passante, et à ce que la cellule de commutation 41 dudit bras 40 reliant le point milieu 42 et l'entrée continue négative 48 soit passante. La machine électrique est alors déconnectée de la source d'énergie électrique.

Lorsque le système de transmission 3 est un double embrayage, la commande auxiliaire consiste par exemple à rendre non passant l'ensemble des cellules de commutation 41 du convertisseur statique 31.

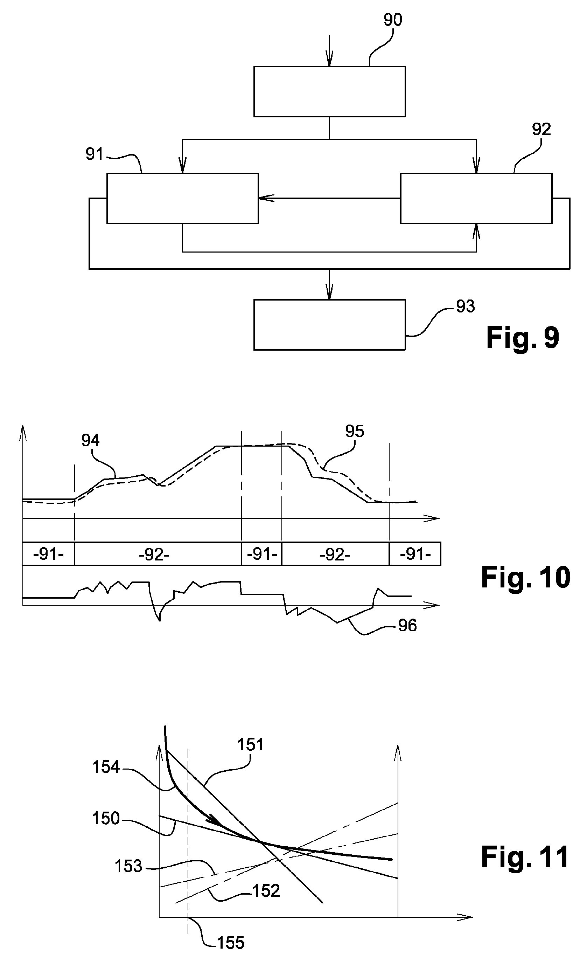

On a représenté sur la figure 9 un exemple de procédé de commande de l'actionneur 2 décrit précédemment. Le procédé peut comprendre une étape 90 d'initialisation de l'actionneur 2. Cette étape peut permettre de déterminer l'angle électrique initial du rotor de la machine électrique 6. Lorsque la machine électrique 6 est une machine synchrone, cette étape peut consister à appliquer une tension arbitraire au stator de la machine 6 pour orienter le rotor dans une direction préférentielle et mettre l'observateur 70 à zéro.

A la réception d'une consigne via le bus CAN, l'actionneur 2 est :

- soit commandé selon une étape 91 afin que la constante de couple K prenne une valeur élevée, de manière à ce que l'actionneur soit dans un mode de fonctionnement de maintien en état du système de transmission 3 ou soumis à un déplacement lent,

- soit commandé selon une étape 92 afin que la constante de couple K prenne une valeur faible, de manière à ce que l'actionneur soit dans un mode de fonctionnement dans lequel il est soumis à un déplacement rapide.

Lors d'une étape ultérieure 93, l'actionneur peut être désactivé, l'alimentation électrique étant alors interrompue.

La figure 10 représente d'une part sur une courbe 94 la valeur de consigne pour la position de l'actionneur 92 telle que déterminée par exemple par l'unité de contrôle moteur du véhicule, et sur une courbe 95 la position effective de cet actionneur 2.

En regard de ces positions sont représentés le mode de fonctionnement de l'actionnement qui correspond dans l'exemple considéré à une alternance des étapes 91 et 92 décrites en référence à la figure 9, et sur une courbe 96 le courant électrique alimentant le circuit électrique de l'induit de l'actionneur 2.

Comme on peut le voir, le fait que la constante de couple K ait une valeur élevée lors des étapes 91 permet une consommation de courant réduite, tandis que le fait que cette constante de couple K ait au moins une valeur faible lors des étapes 92 permet un déplacement rapide de l'actionneur 2 pour répondre aux consignes de manière satisfaisante.

La figure 11 représente :

- le nombre de révolutions de la machine électrique 6 parcourues lors de l'application d'une consigne de courant de type échelon pendant une durée déterminée, cette durée déterminée correspondant à la durée d'actionnement souhaitée pour un déplacement de la sortie de l'actionneur 2 donné et à un couple moyen exercé par la charge du système de transmission 3 sur la machine 6 selon les courbes 150 et 151,

- le courant parcourant le circuit électrique du rotor en fonction de ce couple moyen selon les courbes 152 et 153, et

- la charge de l'actionneur 2 en fonction de ce couple selon la courbe 154 qui représente une énergie de déplacement moyenne constante telle que le produit de la course de déplacement portée en ordonnée par le couple exercé sur la machine électrique 6 soit constant.

Les courbes 150 et 152, respectivement 151 et 153, correspondent au cas où la constante de couple K a une valeur élevée, respectivement faible. Le rapport de réduction fixe est représenté par la droite 155.

Le point d'intersection entre les courbes 155 et 154 correspond au déplacement minimum à réaliser avec le réducteur 7 dont la valeur de rapport de réduction a été déterminée comme mentionné préalablement.

Le point d'intersection entre la courbe 152 et la droite 155 définit le courant alimentant le circuit électrique de l'induit lorsque la constante de couple K a la valeur élevée, tandis que l'intersection entre la courbe 151 et la droite 155 permet de définir le nombre de révolutions de la machine électrique 6 lorsque la constante de couple K a la valeur faible, ce nombre de révolutions étant effectué pendant une durée correspondant au temps de déplacement souhaité sur la course de sortie de l'actionneur 2.

Comment on peut le voir, le doublet formé par les courbes 150 et 152 ne permet pas à l'actionneur 2 de suivre la consigne imposée mais permet de ne consommer qu'un courant réduit. La commande du système 32 permettant d'obtenir cette valeur pour la constante de couple est ainsi particulièrement adaptée à un mode de fonctionnement de l'actionneur 2 correspondant à un maintien du système de transmission 3 dans un état donné ou à un déplacement lent de l'actionneur 2.

Comment on peut par ailleurs le voir, le doublet formé par les courbes 151 et 153 permet à l'actionneur 2 de suivre la consigne imposée mais nécessite une consommation importante de courant par la machine électrique 6. La commande du système 32 permettant d'obtenir cette valeur pour la constante de couple est ainsi particulièrement adaptée à un mode de fonctionnement transitoire de l'actionneur 2 correspondant à un déplacement rapide de l'actionneur 2.

L'actionneur 2 présente ainsi deux modes de fonctionnement distincts malgré le fait que le réducteur 7 ait un rapport de valeur fixe.

L'invention n'est pas limitée aux exemples qui viennent d'être décrits.

En particulier, bien que les exemples décrits n'aient fait mention que de machines électriques tournantes, l'invention s'applique aussi à un actionneur comprenant une machine électrique linéaire.

L'actionneur et le système de transmission selon l'invention peuvent former un ensemble destiné à être interposé entre un moteur thermique de propulsion de véhicule et la boîte de vitesses du véhicule.

En variante, cet ensemble est destiné à être interposé entre un moteur thermique de propulsion de véhicule et une boîte de vitesses associée à une machine électrique tournante.

En variante encore, deux ensembles comprenant chacun l'actionneur selon l'invention et le système de transmission peuvent être utilisés, l'un des ensembles étant par exemple disposé côté moteur thermique et l'autre ensemble étant disposé côté boîte de vitesses. Les deux ensembles peuvent être associés à un moteur électrique de propulsion, par exemple une machine électrique tournante. Le système de transmission côté moteur thermique permet alors d'accoupler ou de désaccoupler en rotation le vilebrequin du moteur thermique au rotor de la machine électrique tournante. Le système de transmission côté boîte de vitesses permet alors d'accoupler ou de désaccoupler le rotor de la machine électrique tournante à un arbre d'entrée de la boîte de vitesses.

On peut par exemple mettre en évidence l'effet apporté par l'invention en comparant sur un banc les grandeurs suivantes dans deux modes de fonctionnement distincts de l'actionneur, l'un de ces modes correspondant à un anti-calage ou débrayage d'urgence :

- position de la sortie de l'actionneur,
- courant électrique alimentant le moteur électrique,
- couple exercé par la charge du système de transmission sur la machine électrique de l'actionneur 3.

**Revendications**

1.  Actionneur (2) pour système de transmission (3) de véhicule, comprenant :

    - une machine électrique (6) comprenant un induit et un inducteur, la machine (6) étant telle que la relation entre une grandeur représentative du couple électromagnétique (T) exercé sur la machine (6) et une grandeur représentative du courant (I) circulant dans le circuit électrique de l'induit fasse intervenir une constante (K), (K) étant la constante de couple de la machine électrique (6),
    - un convertisseur statique (31) comprenant une pluralité de cellules de commutation (41), le convertisseur statique (31) étant disposé de manière à relier électriquement le circuit électrique de l'induit à une source d'énergie électrique, et
    - un système de commande (32) des cellules de commutation (41) du convertisseur statique (31), ledit système étant configuré de manière que la constante de couple (K) de la machine électrique (6) puisse prendre au moins deux valeurs distinctes selon la commande appliquée auxdites cellules (41).

2.  Actionneur selon la revendication 1, comprenant un réducteur (7) présentant un rapport de réduction fixe.

3.  Actionneur selon la revendication 1 ou 2, le convertisseur statique (31) comprenant trois bras (40) montés en parallèle, chaque bras (40) comprenant deux cellules de commutation (41) en série séparées entre elles par un point milieu (42), chaque point milieu (42) permettant la connexion électrique du convertisseur (31) au circuit électrique de l'induit.

4.  Actionneur selon l'une quelconque des revendications précédentes, la machine électrique (6) est une machine à courant continu comprenant trois balais (51, 52, 53), chaque balai étant relié à un des points milieux (42) du convertisseur statique (31).

5.  Actionneur selon la revendication 4, les balais (51, 52, 53) étant disposés de manière à ce que, lorsqu'ils coopèrent avec le collecteur (50) de la machine à courant continu (6):

    - lorsque le courant (I) circule entre le premier (51) et le deuxième (52) balai dans le circuit électrique de l'induit, ledit courant parcourt la totalité des spires du circuit électrique de l'induit, et
    - lorsque le courant (I) circule entre le troisième balai (53) et l'un du premier (51) et du deuxième (52) balai dans le circuit électrique de l'induit, ledit courant ne parcourt qu'une partie des spires du circuit électrique de l'induit.

6.  Actionneur selon la revendication 5, les balais (51, 52, 53) étant disposés de manière à ce que, lorsqu'ils coopèrent avec le collecteur (50) de la machine à courant continu (6), le courant (I) circulant entre le troisième (53) et le premier (51) balai dans le circuit électrique de l'induit parcourt un nombre de spires égal à celui qu'il parcourt lorsqu'il circule entre le troisième (53) et le deuxième (52) balai dans le circuit électrique de l'induit.

7.  Actionneur selon la revendication 5, les balais (51, 52, 53) étant disposés de manière à ce que, lorsqu'ils coopèrent avec le collecteur (50) de la machine à courant continu (6), le courant (I) circulant entre le troisième (53) et le premier (51) balai dans le circuit électrique de l'induit parcourt un premier nombre de spires ($n_1$) différent d'un deuxième nombre de spires ($n_2$) parcourues par ledit courant (I) lorsqu'il circule entre le troisième (53) et le deuxième (52) balai dans le circuit électrique de l'induit.

8.  Actionneur selon l'une quelconque des revendications 4 à 7, le système de commande (32) des cellules de commutation (41) étant configuré de manière à permettre au moins :

    - de commander les cellules de commutation (41) de manière à ce que le courant (I) circulant dans le circuit électrique de l'induit circule également dans le premier balai (51), le deuxième balai (52), et une partie des bras aux points milieux (42) desquels sont reliés lesdits balais (51, 52), et

- de commander les cellules de commutation (41) de manière à ce que le courant (I) circulant dans le circuit électrique de l'induit circule également dans le troisième balai (53) et dans l'un du premier (51) et du deuxième balai (52), et une partie des bras aux points milieux (42) desquels sont reliés lesdits balais (51, 52, 53).

9. Actionneur selon la revendication 3, la machine électrique (6) étant une machine synchrone et le convertisseur statique (31) formant un onduleur triphasé.

10. Actionneur selon la revendication 9, le système de commande (32) des cellules de commutation (41) étant configuré pour appliquer une commande vectorielle aux cellules de commutation (41) de l'onduleur triphasé (31), ladite commande permettant que l'angle interne ($\psi$) de la machine prenne au moins deux valeurs distinctes.

11. Ensemble, comprenant :

- un actionneur (2) selon l'une quelconque des revendications précédentes, et
- un système de transmission (3) de véhicule, ledit système (3) comprenant un organe apte à être déplacé par l'actionneur (2).

12. Procédé de commande d'un actionneur (2), l'actionneur étant selon l'une quelconque des revendications précédentes, procédé dans lequel la commande des cellules de commutation (41) du convertisseur statique (31) permet que la valeur de la constante de couple (K) de la machine électrique (6) prenne au moins une valeur élevée et au moins une valeur faible.

13. Procédé selon la revendication 12, comprenant l'étape (91) selon laquelle on commande les cellules de commutation (41) de manière à ce que la constante de couple (K) prenne la valeur élevée lorsque l'actionneur (2) maintient le système de transmission (3) dans un état donné.

14. Procédé selon la revendication 12 ou 13, comprenant l'étape (92) selon laquelle on commande les cellules de commutation (41) de manière à ce que la constante de couple (K) prenne la valeur faible pour déplacer l'actionneur (2).

15. Procédé selon la revendication 14, dans lequel le système de transmission (3) est un embrayage simple ou double dont l'état au repos est l'état accouplé, et dans lequel on commande les cellules de commutation (41) de manière à ce que la constante de couple (K) prenne la valeur élevée pour que l'actionneur (2) maintienne le système de transmission (3) dans l'état désaccouplé, ou dans lequel le système de transmission (3) est un embrayage simple ou double dont l'état au repos est l'état désaccouplé, et dans lequel on commande les cellules de commutation (41) de manière à ce que la constante de couple (K) prenne la valeur élevée pour que l'actionneur (2) maintienne le système de transmission (3) dans l'état accouplé.

**Patentansprüche**

1. Stellglied (2) für ein Fahrzeugantriebssystem (3), umfassend:

- eine elektrische Maschine (6), die einen Anker und einen Stator umfasst, wobei die Maschine (6) derart ist, dass die Beziehung zwischen einer repräsentativen Größe des elektromagnetischen Drehmoments (T), das auf der Maschine (6) ausgeübt wird, und einer repräsentativen Größe des Stroms (I), der in dem Stromkreis des Ankers fließt, eine Konstante (K) zustande kommen lässt, wobei (K) die Drehmomentkonstante der elektrischen Maschine (6) ist,
- einen statischen Umformer (31), der eine Vielzahl von Umrichterzellen (41) umfasst, wobei der statische Umformer (31) in einer Weise angeordnet ist, den Stromkreis des Ankers mit einer Quelle elektrischer Energie elektrisch zu verbinden, und
- ein Steuerungssystem (32) der Umrichterzellen (41) des statischen Umformers (31), wobei das System in einer Weise konfiguriert ist, dass die Drehmomentkonstante (K) der elektrischen Maschine (6) zumindest zwei verschiedene Werte gemäß dem auf die Zellen (41) angewendeten Steuern annehmen kann.

2. Stellglied nach Anspruch 1, umfassend ein Getriebe (7), das eine eingestellte feste Untersetzung aufweist.

3. Stellglied nach Anspruch 1 oder 2, wobei der statische Umformer (31) drei Schenkel (40) umfasst, die parallel angebracht sind, wobei jeder Schenkel (40) zwei Umrichterzellen (41) in Reihe umfasst, die untereinander durch einen Mittelleiter (42) getrennt sind, wobei jeder Mittelleiter (42) die elektrische Verbindung des Umformers (31) zum Stromkreis des Ankers erlaubt.

4. Stellglied nach einem der vorhergehenden Ansprüche, wobei die elektrische Maschine (6) eine Gleichstrommaschine ist, die drei Bürsten (51, 52, 53) umfasst, wobei jede Bürste mit einem der Mittelleiter (42) des statischen Umformers (31) verbunden ist.

5. Stellglied nach Anspruch 4, wobei die Bürsten (51, 52, 53) in einer Weise angeordnet sind, damit, wenn sie mit dem Kollektor (50) der Gleichstrommaschine (6) zusammenwirken:

- wenn der Strom (I) zwischen der ersten (51) und der zweiten (52) Bürste im Stromkreis des Ankers fließt, der Strom alle Windungen des Ankerstromkreises durchfließt, und,
- wenn der Strom (I) zwischen der dritten Bürste (53) und der ersten (51) oder der zweiten (52) Bürste in dem Ankerstromkreis fließt, der Strom nur einen Teil der Windungen des Ankerstromkreises durchfließt.

6. Stellglied nach Anspruch 5, wobei die Bürsten (51, 52, 53) in einer Weise angeordnet sind, damit, wenn sie mit dem Kollektor (50) der Gleichstrommaschine (6) zusammenwirken, der Strom (I), der zwischen der dritten (53) und der ersten (51) Bürste in dem Ankerstromkreis fließt, eine Windungszahl gleich der durchfließt, die er durchfließt, wenn er zwischen der dritten (53) und der zweiten (52) Bürste in dem Ankerstromkreis fließt.

7. Stellglied nach Anspruch 5, wobei die Bürsten (51, 52, 53) in einer Weise angeordnet sind, damit, wenn sie mit dem Kollektor (50) der Gleichstrommaschine (6) zusammenwirken, der Strom (I), der zwischen der dritten (53) und der ersten (51) Bürste in dem Ankerstromkreis fließt, eine erste Windungszahl ($n_1$) durchfließt, die sich von einer zweiten, vom Strom (I) durchflossenen Windungszahl ($n_2$) unterscheidet, wenn er zwischen der dritten (53) und der zweiten (52) Bürste in dem Ankerstromkreis fließt.

8. Stellglied nach einem der Ansprüche 4 bis 7, wobei das Steuerungssystem (32) der Umrichterzellen (41) in einer Weise konfiguriert ist, um mindestens Folgendes zu erlauben:

- die Umrichterzellen (41) in einer Weise zu steuern, dass der Strom (I), der in dem Ankerstromkreis fließt, gleichermaßen in der ersten Bürste (51), der zweiten Bürste (52), und einem Teil der Schenkel zu den Mittelleitern (42), mit denen die Bürsten (51, 52) verbunden sind, fließt, und
- die Umrichterzellen (41) in einer Weise zu steuern, dass der Strom (I), der in dem Ankerstromkreis fließt, gleichermaßen in der dritten Bürste (53) und in der ersten (51) oder der zweiten Bürste (52) und einem Teil der Schenkel zu den Mittelleitern (42), mit denen die Bürsten (51, 52, 53) verbunden sind, fließt.

9. Stellglied nach Anspruch 3, wobei die elektrische Maschine (6) eine Synchronmaschine ist und der statische Umformer (31) einen Dreiphasen-Wechselrichter bildet.

10. Stellglied nach Anspruch 9, wobei das Steuerungssystem (32) der Umrichterzellen (41) zum Anwenden einer Vektorsteuerung auf die Umrichterzellen (41) des Dreiphasen-Wechselrichters (31) konfiguriert ist, wobei das Steuern erlaubt, dass der Pol-Innenwinkel ($\Psi$) der Maschine zumindest zwei verschiedene Werte annimmt.

11. Anordnung, umfassend:

- ein Stellglied (2) nach einem der vorhergehenden Ansprüche, und
- ein Fahrzeugantriebssystem (3), wobei das System (3) ein Organ umfasst, das geeignet ist, durch das Stellglied (2) verschoben zu werden.

12. Verfahren zum Steuern eines Stellglieds (2) nach einem der vorhergehenden Ansprüche, in welchem Verfahren das Steuern der Umrichterzellen (41) des statischen Umformers (31) erlaubt, dass der Wert der Drehmomentkonstante (K) der elektrischen Maschine (6) zumindest einen hohen Wert und zumindest einen niedrigen Wert annimmt.

13. Verfahren nach Anspruch 12, umfassend den Schritt (91), nach dem die Umrichterzellen (41) in einer Weise gesteuert werden, dass die Drehmomentkonstante (K) den hohen Wert annimmt, wenn das Stellglied (2) das Antriebssystem (3) in einem gegebenen Zustand hält.

14. Verfahren nach Anspruch 12 oder 13, umfassend den Schritt (92), nach dem die Umrichterzellen (41) in einer Weise gesteuert werden, dass die Drehmomentkonstante (K) den niedrigen Wert annimmt, um das Stellglied (2) zu verschieben.

15. Verfahren nach Anspruch 14, in dem das Antriebssystem (3) eine Einzel- oder Doppelkupplung ist, deren Ruhezustand der eingekuppelte Zustand ist, und in dem die Umrichterzellen (41) in einer Weise gesteuert werden, dass die Drehmomentkonstante (K) den hohen Wert annimmt, damit das Stellglied (2) das Antriebssystem (3) in dem ausgekuppelten Zustand hält, oder in dem das Antriebssystem (3) eine Einzel- oder Doppelkupplung ist, deren Ruhezustand der ausgekuppelte Zustand ist und in dem die Umrichterzellen (41) in einer Weise gesteuert werden, dass die Drehmomentkonstante (K) den hohen Wert annimmt, damit das Stellglied (2) das Antriebssystem (3) in dem eingekuppelten Zustand hält.

**Claims**

1. Actuator (2) for a vehicle transmission system (3), comprising:

   - an electrical machine (6) comprising an armature and a field winding, the machine (6) being such that the relationship between a quantity representative of the electromagnetic torque (T) exerted on the machine (6) and a quantity representative of the current (I) circulating in the electrical circuit of the armature involves a constant (K), (K) being the torque constant of the electrical machine (6),
   - a solid state converter (31) comprising a plurality of switching cells (41), the solid state converter (31) being arranged so as to electrically link the electrical circuit of the armature to a source of electrical energy, and
   - a control system (32) for the switching cells (41) of the solid state converter (31), said system being configured in such a way that the torque constant (K) of the electrical machine (6) can take at least two distinct values according to the control applied to said cells (41) .

2. Actuator according to Claim 1, comprising a reduction gear (7) exhibiting a fixed reduction ratio.

3. Actuator according to Claim 1 or 2, the solid state converter (31) comprising three arms (40) mounted in parallel, each arm (40) comprising two switching cells (41) in series separated from one another by a midpoint (42), each midpoint (42) allowing the electrical connection of the converter (31) to the electrical circuit of the armature.

4. Actuator according to any one of the preceding claims, the electrical machine (6) is a direct current machine comprising three brushes (51, 52, 53), each brush being linked to one of the midpoints (42) of the solid state converter (31).

5. Actuator according to Claim 4, the brushes (51, 52, 53) being arranged in such a way that, when they cooperate with the collector (50) of the direct current machine (6):

   - when the current (I) circulates between the first (51) and the second (52) brushes in the electrical circuit of the armature, said current passes through all the turns of the electrical circuit of the armature, and
   - when the current (I) circulates between the third brush (53) and either the first (51) or the second (52) brush in the electrical circuit of the armature, said current passes through only some of the turns of the electrical circuit of the armature.

6. Actuator according to Claim 5, the brushes (51, 52, 53) being arranged in such a way that, when they cooperate with the collector (50) of the direct current machine (6), the current (I) circulating between the third (53) and the first (51) brushes in the electrical circuit of the armature passes through a number of turns equal to that that it passes through when it circulates between the third (53) and the second (52) brushes in the electrical circuit of the armature.

7. Actuator according to Claim 5, the brushes (51, 52, 53) being arranged in such a way that, when they cooperate with the collector (50) of the direct current machine (6), the current (I) circulating between the third (53) and the first (51) brushes in the electrical circuit of the armature passes through a first number of turns ($n_1$) different from a second number of turns ($n_2$) passed through by said current (I) when it circulates between the third (53) and the second (52) brushes in the electrical circuit of the armature.

8. Actuator according to any one of Claims 4 to 7, the control system (32) of the switching cells (41) being configured in such a way as to make it possible at least:

   - to control the switching cells (41) in such a way that the current (I) circulating in the electrical circuit of the armature circulates also in the first brush (51), the second brush (52), and a part of the arms to the midpoints (42) of which said brushes (51, 52) are linked, and
   - to control the switching cells (41) in such a way that the current (I) circulating in the electrical circuit of the armature circulates also in the third brush (53) and in either the first (51) or the second (52) brush, and a part of the arms to the midpoints (42) of which said brushes (51, 52, 53) are linked.

9. Actuator according to Claim 3, the electrical machine (6) being a synchronous machine and the solid state converter (31) forming a three-phase inverter.

10. Actuator according to Claim 9, the control system (32) of the switching cells (41) being configured to apply a vector command to the switching cells (41) of the three-phase inverter (31), said command making it possible for the internal angle ($\psi$ of the machine to take at least two distinct values.

11. Assembly, comprising:

    - an actuator (2) according to any one of the preceding claims, and
    - a vehicle transmission system (3), said system (3) comprising a member that can be displaced by the actuator (2).

**12.** Method for controlling an actuator (2), the actuator being according to any one of the preceding claims, a method in which the control of the switching cells (41) of the solid state converter (31) makes it possible for the value of the torque constant (K) of the electrical machine (6) to take at least one high value and at least one low value.

**13.** Method according to Claim 12, comprising the step (91) according to which the switching cells (41) are controlled in such a way that the torque constant (K) takes the high value when the actuator (2) keeps the transmission system (3) in a given state.

**14.** Method according to Claim 12 or 13, comprising the step (92) according to which the switching cells (41) are controlled in such a way that the torque constant (K) takes the low value to displace the actuator (2).

**15.** Method according to Claim 14, in which the transmission system (3) is a single or double clutch, the state of which at rest is the coupled state, and in which the switching cells (41) are controlled in such a way that the torque constant (K) takes the high value for the actuator (2) to keep the transmission system (3) in the uncoupled state, or
in which the transmission system (3) is a single or double clutch of which the state at rest is the uncoupled state, and in which the switching cells (41) are controlled in such a way that the torque constant (K) takes the high value for the actuator (2) to keep the transmission system (3) in the coupled state.

**Fig. 1**

**Fig. 3**

**Fig. 2**

EP 2 860 869 B1

**Fig. 4a**

**Fig. 5a**

**Fig. 6a**

**Fig. 4b**

**Fig. 5b**

**Fig. 6b**

22

## Fig. 7

**32**
**61** **60**

v_cons
i_cons

**2**

Ia
Ib

**47** **31**

**41** **41** **44** **40**
**42** **42**

**48**

**6**

## Fig. 8

**32** **75** **81** **82** **83**

Istp
ψ

ud
uq

uα
uβ

ua
ub
uc

**35**

**31** **47** **41**

**40** **42** **40**
**42**

**44** **41**

**48**

Iq Id

**71**

Iα
Iβ

Ia
Ib
Ic

Ia
Ib

**72**

θe_es

θe

**70** **12**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2896354
- US 3469166 A
- FR 2951033